# EUROPEAN PATENT SPECIFICATION

(11) **EP 3 093 166 B1**
(45) Date of publication and mention of the grant of the patent: **24.02.2021**
(21) Application number: 16166246.5
(22) Date of filing: 20.04.2016
(51) Int. Cl.: B60C 23/04

(54) **TYRE PRESSURE MONITORING MODULE**
REIFENDRUCKÜBERWACHUNGSMODUL
MODULE DE SURVEILLANCE DE LA PRESSION DES PNEUS

(30) Priority: 13.05.2015 SE 1550620
(43) Date of publication of application: 16.11.2016
(73) Proprietor: Scania CV AB, 151 87 Södertälje (SE)
(72) Inventor: Ledfelt, Gunnar, 155 91 Nykvarn (SE); Da Silva, Luiz Gabriel, 04209-003 Sao Paulo (BR); Olsén, Daniel, 137 38 Västerhaninge (SE)
(74) Representative: Scania CV AB

(56) References cited:
- WO-A1-2015/015692
- US-A1- 2002 101 341

## Description

### Technical field

The present disclosure relates to a tyre pressure monitoring module for a vehicle and a method in connection to such a tyre pressure monitoring module.

### Background

The tyre pressures of a vehicle may be monitored via a system called Tyre Pressure Monitoring (TPM) system which is used to detect air leakage in the vehicle tyres. A system of today consists of an Electrical Control Unit (ECU) and tyre pressure sensor modules placed for measuring the air pressure of each tyre. The ECU is connected to the vehicle's electrical system and communicates via a communication bus, for example a CAN-bus (Controller Area Network) which uses a message based protocol, with other systems of the vehicle. The communication between the ECU and the sensor modules is managed via a Radio Frequency (RF) link and the sensor modules are configured to transmit updated pressure data every 10^{th} minutes to the ECU. A sensor module is powered from an internal battery arranged within the module.
In order to handle the power consumption during ignition off, the system will shut down the ECU and stop receiving data from the sensors. However, the sensors will continue sending data every 10^{th} minute. Thus, the functionality of the system will not allow the driver to get immediate pressure data from the tyres at ignition on. For example, if the truck has come to a longer standstill and the ignition is off (i.e. during a sleeping brake of the driver), the pressure data that the driver will see when the vehicle is turned on again, is the data stored when the driver turned off the ignition. This means that in the worst case it can take up to 10 minutes after the ignition is switched on before new fresh data will be available from the sensors. Driving with low pressure in the tyres before receiving a warning of low pressure will increase the risk of a flat tyre.

In the following some prior art documents will be discussed that generally relates to various solutions regarding tyre pressure monitoring.

US-5963128 describes a tyre pressure monitoring system including an electronic unit mounted inside each tyre, comprising a pressure sensor, switches and a battery and control electronic. The electronic unit communicates with an external device via a bi-directional communication link. The vehicle's tyre pressures are monitored and displayed in real-time pressure values on a display. The display also indicates an alarm condition when the tyre pressure falls below certain predefined thresholds. Typically, the pressure samples are taken once every 15 minutes, rather than every 10 seconds, while the vehicle is stationary for long periods of time.
In a stationary mode the control electronic can be programmed to carry out different tasks, e.g. to a total power-down mode, or an energy saving mode in order to conserve sensor battery power while the vehicle is stationary. Thus, the electronic unit inside each tyre may be set in different stationary modes in order to conserve the battery power within the electronic unit.

US-2011/0254660 relates to an integrated system and method for tyre pressure monitoring and remote keyless entry. When the vehicle is not at operation (such as before ignition), the pressure monitoring module, provided within each tyre, is configured to send a tyre information signal, including pressure data, to an in-vehicle integrated controller at a longer standby period. When the vehicle is not in use (such as the engine is stopped), the user can still be aware of the updated tyre pressure data (sending at a longer standby period Ps), while the battery power of the pressure monitoring module is saved.

In the above discussed patent documents the tyre sensors within the tyres are configured to receive externally generated requests and adapt its function accordingly. Thus, the presented technique requires a processing capacity within the sensors to perform the requested function. In addition the external module must be arranged to generate the request signals to be transmitted to the sensors. Thus, a drawback of the presently used technique is that more advanced tyre sensors are required, and that the external module e.g. must possess a capability of establishing a bi-directional communication link with the tyre sensor in order to control the tyre sensors resulting in a complex circuitry solution.

US 2002/101341 A1 describes another tire air pressure detecting device.

The object of the present invention is to achieve an improved tyre pressure monitoring module, and a method implemented on the module, that in particular is adapted to handle measurements of the tyre pressure during stand-still periods of a vehicle and to indicate tyre pressure changes to the driver before the next driving session, resulting in a decreased current consumption of the vehicle's battery, in particular at longer stand still periods, e.g. when the vehicle is long term parked.

### Summary

The above-mentioned object is achieved by the present invention according to the independent claims.

According to a first aspect the present invention relates to a tyre pressure monitoring module as defined in the first independent claim.

According to a second aspect the present invention relates to a method in connection with a tyre pressure monitoring module as defined in the second independent claim.

Preferred embodiments are set forth in the dependent claims.

The tyre pressure monitoring module is adapted to be in an on mode, an off mode and in a wake up mode, where each mode has a predefined level of functionality. A less complicated and simplified construction of the TPM module is then required as all energy saving capabilities relates to functions of the TPM module, because no wake up transmission to the pressure sensor modules arranged at each tyre is required to be sent.

In one embodiment the TPM module involves taking the rules of driving schemes for the driver into account. Thereby the driver may be notified during sleep some hour(s) before the driver is allowed to continue driving. This will gain the advantages of changing tyres/call for assistance without losing driving time, or delay planned departure time.

In another embodiment an adaptive function is implemented where measured tyre pressure value deviation is taken into account in order to determine the activation rate of the wake up mode. This embodiment is in particular beneficial during long standstill of a vehicles, e.g. during transportation overseas.

In summary, the TPM module and the method according to the present invention has the advantage of keeping the information regarding the status of the vehicle's tyre pressures updated resulting in that the driver will have relevant information of e.g. low tyre pressure when the ignition is switched on.

### Brief description of the drawings

Figure 1 is a schematic illustration of a vehicle provided with a tyre pressure measurement module according to the present invention.
Figure 2 is a block diagram schematically illustrating a tyre pressure measurement module according to the present invention.
Figure 3 is a state diagram illustrating the method according to the present invention.
Figures 4-7 show schematic diagrams illustrating various embodiments of the present invention.

### Detailed description

The invention will now be described in detail with references to the appended figures. Throughout the figures like or similar items have the same reference signs.

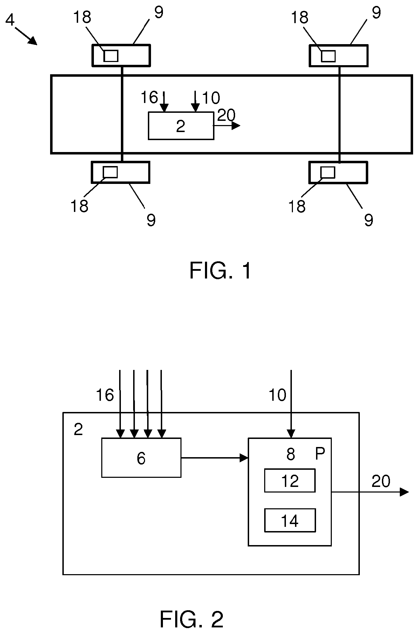

With reference to figure 1 a schematic illustration of a vehicle 4 is shown. The vehicle may be a bus, a cargo vehicle, a car, or any other vehicle provided with air filled tyres 9. The vehicle may also include at least one trailer, semi-trailer or other combinations. The vehicle comprises a tyre pressure monitoring (TPM) system including a tyre pressure monitoring (TPM) module 2. The system also comprises a plurality of tyre pressure sensor modules 18 arranged in connection with the tyres 9 of the vehicle. This means that the tyre pressure monitoring system will monitor also the tyre pressure in the trailer/semi-trailer.
A TPM module is an Electrical Control Unit (ECU) that is connected to the vehicle's electrical system and communicates via a communication bus, for example a CAN-bus (Controller Area Network) which uses a message based protocol.

In the block diagram illustrated in figure 2 further details of the TPM module is shown. The TPM module comprises a signal receiving unit 6 and a control unit 8 configured to receive an activation signal 10. In one embodiment the activation signal is on when the ignition of the vehicle is switched on, and off when the ignition of the vehicle is switched off. It is also possible to generate the activation signal independently of the ignition status of the vehicle.

The control unit 8 includes an activation timer 12 and a storage unit 14. The receiving unit 6 is configured to receive repeatedly transmitted wireless tyre pressure signals 16. Each tyre pressure signal 16 includes a measured tyre pressure value, being transmitted at a constant time period T between each transmission from a pressure sensor module 18 arranged for measuring tyre pressures. The communication between the TPM module and the sensor modules is managed via an RF link and the sensor modules are configured to transmit updated pressure data every T^{th} minutes to the receiving unit 6. T is preferably in the interval of 5-15 minutes, and more preferably approximately 9-11 minutes. A sensor module is powered from an internal battery arranged within the sensor module.

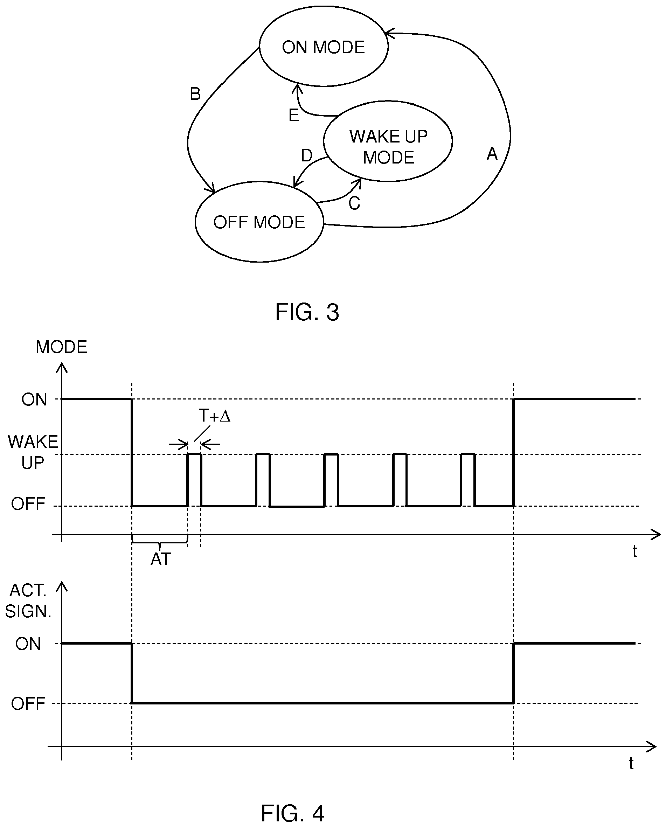

The tyre pressure monitoring module is adapted to be in an on mode, an off mode and in a wake up mode, where each mode has a predefined level of functionality. In all modes the TPM module is capable of interpreting the activation signal 10. The different modes will be discussed in the following with references to the mode diagram shown in figure 3.

In the on mode the TPM module has a high level of functionality. The module is configured to enter the on mode if the activation signal 10 is on - transitions A and E, and to exit the on mode if the activation signal 10 is off - transition B.
The high level of functionality includes capability to receive the tyre pressure signal, to update the storage unit with the latest pressure values from the tyre pressure signals, and to analyze the pressure values. In addition, in the on mode, the TPM module has the capability to generate a tyre pressure measurement signal 20 including an indication of the tyre pressure status, e.g. that the status is OK, i.e. all measured tyre pressures fulfil the requirement for driving, or not OK, i.e. the tyre pressure of one or many tyres does not fulfil the requirement for driving. The tyre pressure measurement signal 20 is e.g. available via the instrument cluster (ICL) of the vehicle where the driver can see all tyres' pressures. Before leaving the on mode operational data needed during next on mode session may be stored, e.g. operational data such as total run time, remaining resting time, and other parameters.

In the off mode the TPM module has a low level of functionality resulting in a minimum current consumption. The module is configured to enter the off mode if the activation signal 10 is off - transition B, and to exit the off mode if the activation signal 10 is on - transition A.
The low level of functionality includes capability of being controlled by the activation timer, but not capability of receiving the tyre pressure signal.

In the wake up mode the TPM module has a medium level of functionality. That includes capability of being controlled by the timer, to receive a tyre pressure signal 16, and to update the storage unit 14 with pressure values from the tyre pressure signals 16. The module is configured to enter the wake up mode from the off mode provided that a variable activation time period AT of the activation timer 12 has elapsed - transition C. The wake up mode is active during a time period T+Δ having a predetermined length which is longer than the constant time length T, i.e. the time between transmissions from the pressure sensor modules. Thereby it is assured that at least one tyre pressure signal is received. Δ is preferably in the range of 1-3 minutes. When the time period T+Δ has elapsed the TPM module exits the wake up mode to the off mode - transition D.
In addition the TPM module has the capability to exit the wake up mode if the activation signal 10 is on via transition E to the on mode.
Advantageously, the medium level of functionality includes analyzing the pressure values, and if the analysis indicates unacceptable pressure values, e.g. the current pressure value differ from the previous pressure values more than a predetermined amount, the TPM module is configured to generate a tyre pressure measurement signal 20, e.g. available via the instrument cluster (ICL) of the vehicle.
Both in the on mode and in the wake up mode the TPM module is configured to generate a tyre pressure measurement signal 20 capable of being received by a mobile unit, e.g. a smart-phone.

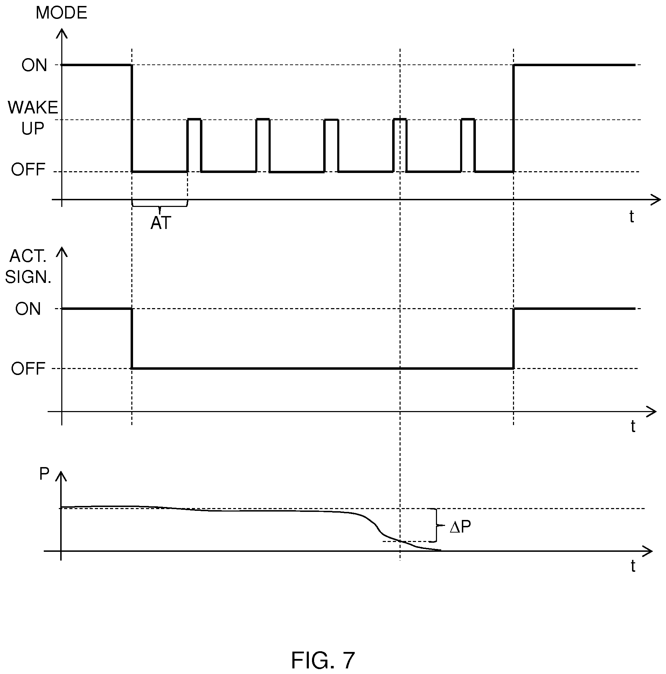

In figures 4-7 various scenarios are illustrated where a diagram indicating the mode is shown at top, and below the status of the activation signal. In figure 7 is also shown a diagram illustrating measured tyre pressure values. The X-axes of the diagrams designate time.

In one embodiment the activation timer 12 is configured to control the activation time period AT such that it is constant for a predetermined number of wake up mode periods. Preferably, the number is in the interval of 3-6. A typical length of the activation time period AT is 2 hours, but the length could naturally be considerably longer or shorter in dependence on the actual situation. In figure 4 is illustrated a scenario where the wake up mode is active five times when the activation signal is off.

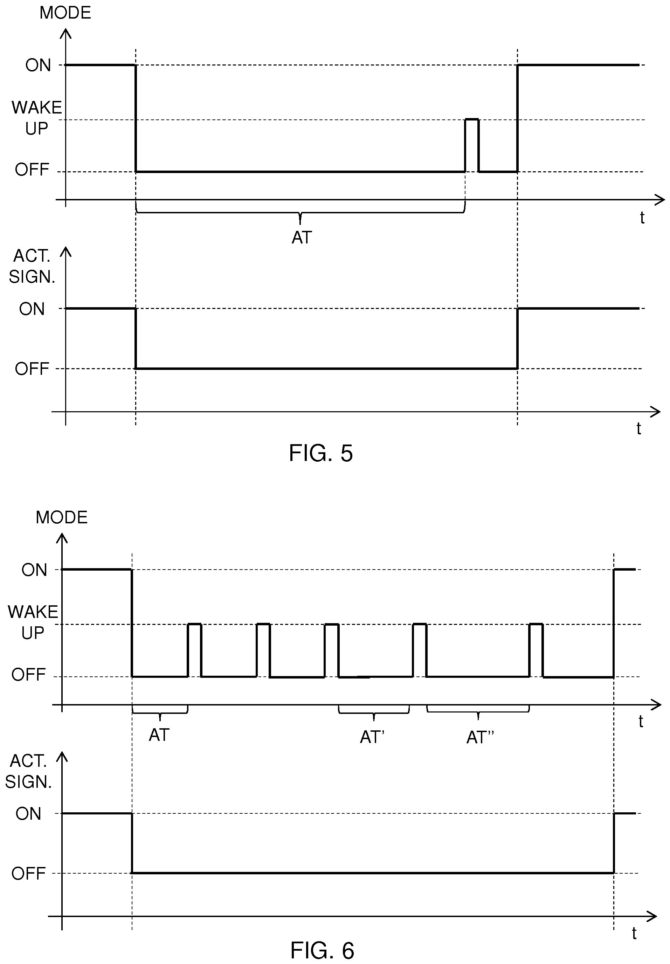

In figure 5 is illustrated a scenario where the activation time period AT is a predetermined time period related to the time duration when the activation signal being off, e.g. the wake up mode is activated in relation to a scheduled sleeping period for the driver such that the tyre pressure measurement is performed shortly before the sleeping period is over to ascertain that available pressure values are reliable.
In figure 6 is illustrated a scenario where the activation timer is configured to control the activation time period AT such that it is increased, designated by AT' and AT", provided that the measured pressure values are relatively constant. This could be the situation during longer stand stills. Thus, the activation timer is configured to adaptively control the activation time period length in dependence of the variation of the measured pressure values. If the variation is less than a predetermined amount, which e.g. could be measured as a maximal allowed deviation (e.g. less than 10%) of the pressure values in relation to a mean value, or a set value, then the wake up mode is activated more seldom.
If on the other hand it is concluded, during the wake up mode that the pressure deviates more than a predetermined deviation ΔP, see figure 7, a tyre pressure measurement signal 20 may be generated with the intention to inform the driver in advance that one or many tyres have a low pressure.

The present invention also relates to a method in connection with a tyre pressure monitoring (TPM) module 2 for a vehicle 4. The method will be described in the following and it is also referred to the above description of the TPM module and in particular to the mode diagram shown in figure 3.

Thus, the TPM module comprises a signal receiving unit 6 and a control unit 8 configured to receive an activation signal 10. The TPM module 10 comprises an activation timer 12 and a storage unit 14. The receiving unit 6 is configured to receive repeatedly transmitted wireless tyre pressure signals 16, where each tyre pressure signal 16 includes a measured tyre pressure value, being transmitted at a constant time period T between each transmission from a pressure sensor module 18 arranged for measuring tyre pressures.
The tyre pressure monitoring module is adapted to be in an on mode having a high level of functionality, an off mode having a low level of functionality and in a wake up mode having a medium level of functionality. These functionalities have been described in detail above.

The method comprises the following method steps:
- Entering the on mode if the activation signal 10 is on, and exiting the on mode if the activation signal 10 is off.
- Entering the off mode if the activation signal 10) is off, and exiting the off mode if the activation signal 10 is on.
- Entering the wake up mode from the off mode provided that a variable activation time period AT of the activation timer 12 has elapsed.
The wake up mode is active during a time period T+Δ having a predetermined length which is longer than the constant time length T and exiting the wake up mode if the activation signal 10 is on. During the wake up mode the TPM module has the capability of being controlled by the timer, to receive a tyre pressure signal 16, and to update said storage unit 14 with pressure values from the tyre pressure signals 16.

According to one embodiment the method comprises controlling the activation time period length AT such that it is constant for a predetermined number of wake up periods, and that the number is in the interval of 3-6. This embodiment is illustrated by references to figure 4, and described more in detail above.

According to another embodiment the method comprises controlling the activation time period length AT such that the activation time period AT is a predetermined time period related to the time duration when said activation signal being off. This embodiment is illustrated by references to figure 5, and described more in detail above.

According to still another embodiment the method comprises controlling the activation time period length such that it is increased provided that the measured pressure values are relatively constant. This embodiment is illustrated by references to figure 6, and described more in detail above. Thus, the activation time period is controlled in dependence of the variation of the measured pressure values.

The method comprises generating a tyre pressure measurement signal 20 including an indication of the tyre pressure status.

The present invention also comprises a computer program P (see figure 2) wherein the computer program P comprises a computer program code to cause a tyre measurement module as disclosed above, or a computer connected to the module, to perform the method which also has been disclosed above. In addition a computer program product, is provided, comprising a computer program code stored on a computer-readable medium to perform the method being disclosed above, when the computer program code is executed by a tyre measurement module defined above, or by a computer connected to that module.
More particularly, the TPM module may further include a processing unit and a memory unit. The processing unit may be made up of one or more Central Processing Units (CPU). The memory unit may be made up of one or more memory units. A memory unit may include a volatile and/or a non-volatile memory, such as a flash memory or Random Access Memory (RAM). The memory unit comprises the computer program P including the computer program code to cause the TPM module, or a computer connected to the TPM module, to perform any of the method steps described above. As mentioned above the TPM module may be an Electronic Control Unit (ECU).

The present invention is not limited to the above-described preferred embodiments. Various alternatives, modifications and equivalents may be used. Therefore, the above embodiments should not be taken as limiting the scope of the invention, which is defined by the appending claims.

## Claims

1. A tyre pressure monitoring (TPM) module (2) for a vehicle (4), the TPM module comprises a signal receiving unit (6) and a control unit (8) configured to receive an activation signal (10) and including an activation timer (12) and a storage unit (14), the receiving unit (6) is configured to receive repeatedly transmitted wireless tyre pressure signals (16), each tyre pressure signal (16) includes a measured tyre pressure value, being transmitted at a constant time period T between each transmission from a pressure sensor module (18) arranged for measuring tyre pressures, the tyre pressure monitoring module is adapted to be in an on mode, an off mode and in a wake up mode, wherein
- in said on mode the TPM module has a high level of functionality, and that the module is configured to enter the on mode if said activation signal (10) is on, and to exit the on mode if said activation signal (10) is off,
- in said off mode the TPM module has a low level of functionality, the module is configured to enter the off mode if said activation signal (10) is off, and to exit the off mode if said activation signal (10) is on, and
- in said wake up mode the TPM module has a medium level of functionality, including capability of being controlled by said timer, to receive a tyre pressure signal (16), and to update said storage unit (14) with pressure values from said tyre pressure signals (16), wherein the module is configured to enter the wake up mode from the off mode provided that a variable activation time period (AT, AT', AT") of said activation timer (12) has elapsed, and that the wake up mode is active during a time period T+Δ having a predetermined length which is longer than said constant time length T, and the capability to exit the wake up mode if said activation signal (10) is on, wherein said activation timer is configured to control said activation time period such that it is increased provided that said measured pressure values are relatively constant or wherein said activation timer is configured to control said activation time period in dependence of the variation of said measured pressure values or wherein said activation time period is a predetermined time period related to the time duration when said activation signal being off.

2. The TPM module according to claim 1, wherein said low level of functionality includes capability of being controlled by said timer, but not capability of receiving said tyre pressure signal.

3. The TPM module according to claim 1 or 2, wherein said medium level of functionality includes analyzing said pressure values, and if said analysis indicates unacceptable pressure values the TPM module is configured to generate an indication signal.

4. The TPM module according to any of claims 1-3, wherein said TPM module is configured to generate a tyre pressure measurement signal (20) including an indication of the tyre pressure status.

5. A vehicle comprising a tyre pressure monitoring (TPM) system including said TPM module according to any of claims 1-4, wherein said system also comprises a plurality of tyre pressure sensor modules arranged in connection with tyres of the vehicle.

6. A method in connection with a tyre pressure monitoring (TPM) module (2) for a vehicle (4), the TPM module comprises a signal receiving unit (6) and a control unit (8) configured to receive an activation signal (10) and including an activation timer (12) and a storage unit (14), the receiving unit (6) is configured to receive repeatedly transmitted wireless tyre pressure signals (16), each tyre pressure signal (16) includes a measured tyre pressure value, being transmitted at a constant time period T between each transmission from a pressure sensor module (18) arranged for measuring tyre pressures, the tyre pressure monitoring module is adapted to be in an on mode having a high level of functionality, an off mode having a low level of functionality and in a wake up mode having a medium level of functionality, wherein the method comprises:
- entering the on mode if said activation signal (10) is on, and exiting the on mode if said activation signal (10) is off,
- entering the off mode if said activation signal (10) is off, and exiting the off mode if said activation signal (10) is on,
- entering the wake up mode from the off mode provided that a variable activation time period (AT, AT', AT") of said activation timer (12) has elapsed, and that the wake up mode is active during a time period T+Δ having a predetermined length which is longer than said constant time length T, and exiting the wake up mode if said activation signal (10) is on, wherein during the wake up mode the TPM module has the capability of being controlled by said timer, to receive a tyre pressure signal (16), and to update said storage unit (14) with pressure values from said tyre pressure signals (16), wherein the method comprises controlling said activation time period such that it is increased provided that said measured pressure values are relatively constant or, wherein the method comprises controlling said activation time period in dependence of the variation of said measured pressure values or wherein said activation time period is a predetermined time period related to the time duration when said activation signal being off.

7. The method according to claim 6, wherein said low level of functionality includes capability of being controlled by said timer, but not capability of receiving said tyre pressure signal.

8. The method according to claim 6 or 7, wherein said medium level of functionality includes analyzing said pressure values, and if said analysis indicates unacceptable pressure values the TPM module is configured to generate a tyre pressure measurement signal (20).

9. The method according to any of claims 6-8, wherein method comprises generating a tyre pressure measurement signal (20) including an indication of the tyre pressure status.

10. A computer program P, wherein said computer program P comprises a computer program code to cause a tyre measurement module according to any of claims 1-9, or a computer connected to said module, to perform the method according to any of claims 6-9.

11. A computer program product comprising a computer program code stored on a computer-readable medium to perform the method according to any of the claims 6-9, when the computer program code is executed by a tyre measurement module according to any of claims 1-5, or by a computer connected to said module.

## Patentansprüche

1. Reifendrucküberwachungs (TPM)-Modul (2) für ein Fahrzeug (4), wobei das TPM-Modul eine Signalempfangseinheit (6) und eine Steuereinheit (8) aufweist, die dazu ausgeführt ist, ein Aktivierungssignal (10) zu empfangen und einen Aktivierungstimer (12) und eine Speichereinheit (14) enthält, wobei die Empfangseinheit (6) dazu eingerichtet ist, wiederholt ausgesandte drahtlose Reifendrucksignale (16), wobei jedes Reifendrucksignal (16) einen gemessenen Reifendruckwert enthält, zu empfangen, die mit einer konstanten Zeitdauer T zwischen jeder Übertragung von einem zum Messen von Reifendrücken angeordneten Drucksensormodul (18) ausgesandt werden, wobei das Reifendrucküberwachungsmodul dazu ausgeführt ist, sich in einem eingeschalteten Modus, einem ausgeschalteten Modus und in einem Aufwachmodus zu befinden, wobei
- in dem eingeschalteten Modus das TPM-Modul ein hohes Maß an Funktionalität hat und das Modul dazu eingerichtet ist, den eingeschalteten Modus einzunehmen, wenn das Aktivierungssignal (10) an ist, und den eingeschalteten Modus zu verlassen, wenn das Aktivierungssignal (10) aus ist,
- in dem ausgeschalteten Modus das TPM-Modul ein niedriges Maß an Funktionalität hat, wobei das Modul dazu eingerichtet ist, den ausgeschalteten Modus einzunehmen, wenn das Aktivierungssignal (10) aus ist, und den ausgeschalteten Modus zu verlassen, wenn das Aktivierungssignal (10) an ist, und
- in dem Aufwachmodus das TPM-Modul ein mittleres Maß an Funktionalität hat, einschließlich der Fähigkeit, durch den Timer gesteuert zu werden, ein Reifendrucksignal (16) zu empfangen und die Speichereinheit (14) mit Druckwerten aus den Reifendrucksignalen (16) zu aktualisieren, wobei das Modul dazu eingerichtet ist, aus dem ausgeschalteten Modus den Aufwachmodus einzunehmen, sofern eine variable Aktivierungszeitdauer (AT, AT', AT") des Aktivierungstimers (12) abgelaufen ist, und wobei der Aufwachmodus während einer Zeitdauer T+Δ aktiv ist, die eine vorbestimmte Länge hat, die länger ist als die konstante Zeitdauer T, und die Fähigkeit hat, den Aufwachmodus zu verlassen, wenn das Aktivierungssignal (10) an ist, wobei der Aktivierungstimer dazu eingerichtet ist, die Aktivierungszeitdauer so zu steuern, dass sie verlängert wird, sofern die gemessenen Druckwerte relativ konstant sind, oder wobei der Aktivierungstimer dazu eingerichtet ist, die Aktivierungszeitdauer in Abhängigkeit der Änderung der gemessenen Druckwerte zu steuern, oder wobei die Aktivierungszeitdauer eine vorbestimmte Zeitdauer ist, die mit der Zeitdauer zusammenhängt, in der das Aktivierungssignal aus ist.

2. TPM-Modul nach Anspruch 1, bei dem das niedrige Maß an Funktionalität die Fähigkeit umfasst, von dem Timer gesteuert zu werden, nicht jedoch die Fähigkeit eines Empfangens des Reifendrucksignals.

3. TPM-Modul nach Anspruch 1 oder 2, bei dem das mittlere Maß an Funktionalität ein Analysieren der Druckwerte umfasst, und falls die Analyse inakzeptable Druckwerte angibt, das TPM-Modul dazu eingerichtet ist, ein Anzeigesignal zu erzeugen.

4. TPM-Modul nach einem der Ansprüche 1 bis 3, wobei das TPM-Modul dazu eingerichtet ist, ein Reifendruckmesssignal (20) zu erzeugen, welches eine Angabe des Reifendruckstatus enthält.

5. Fahrzeug mit einem Reifendrucküberwachungs (TPM)-System, welches das TPM-Modul nach einem der Ansprüche 1 bis 4 enthält, wobei das System ferner mehrere Reifendrucksensormodule aufweist, die in Verbindung mit Reifen des Fahrzeugs angeordnet sind.

6. Verfahren im Zusammenhang mit einem Reifendrucküberwachungs (TPM)-Modul (2) für ein Fahrzeug (4), wobei das TPM-Modul eine Signalempfangseinheit (6) und eine Steuereinheit (8) aufweist, die dazu eingerichtet ist, ein Aktivierungssignal (10) zu empfangen und einen Aktivierungstimer (12) und eine Speichereinheit (14) enthält, wobei die Empfangseinheit (6) dazu eingerichtet ist, wiederholt ausgesandte drahtlose Reifendrucksignale (16), wobei jedes Reifendrucksignal (16) einen gemessenen Reifendruckwert enthält, zu empfangen, die mit einer konstanten Zeitdauer T zwischen jeder Übertragung von einem zum Messen von Reifendrücken angeordneten Drucksensormodul (18) ausgesandt werden, wobei das Reifendrucküberwachungsmodul dazu eingerichtet ist, in einem eingeschalteten Modus mit einem hohen Maß an Funktionalität, einem ausgeschalteten Modus mit einem geringen Maß an Funktionalität und in einem Aufwachmodus mit einem mittleren Maß an Funktionalität zu sein, wobei das Verfahren umfasst:
- Einnehmen des eingeschalteten Modus, wenn das Aktivierungssignal (10) an ist, und Verlassen des eingeschalteten Modus, wenn das Aktivierungssignal (10) aus ist,
- Einnehmen des ausgeschalteten Modus, wenn das Aktivierungssignal (10) aus ist, und Verlassen des ausgeschalteten Modus, wenn das Aktivierungssignal (10) an ist,
- Einnehmen des Aufwachmodus aus dem ausgeschalteten Modus, sofern eine variable Aktivierungszeitdauer (AT, AT', AT") des Aktivierungstimers (12) abgelaufen ist, wobei der Aufwachmodus während einer Zeitdauer T+Δ aktiv ist, die eine vorbestimmte Länge hat, die länger ist als die konstante Zeitdauer T, und Verlassen des Aufwachmodus, wenn das Aktivierungssignal (10) ein ist, wobei während des Aufwachmodus das TPM-Modul die Fähigkeit hat, von dem Timer gesteuert zu werden, ein Reifendrucksignal (16) zu empfangen und die Speichereinheit (14) mit Druckwerten aus den Reifendrucksignalen (16) zu aktualisieren, wobei das Verfahren ein Steuern der Aktivierungszeitdauer solchermaßen umfasst, dass sie verlängert wird, sofern die gemessenen Druckwerte relativ konstant sind, oder wobei das Verfahren ein Steuern der Aktivierungszeitdauer in Abhängigkeit der Änderung der gemessenen Druckwerte umfasst oder wobei die Aktivierungszeitdauer eine vorbestimmte Zeitdauer ist, die mit der Zeitdauer zusammenhängt, in der das Aktivierungssignal aus ist.

7. Verfahren nach Anspruch 6, bei dem das niedrige Maß an Funktionalität die Fähigkeit umfasst, von dem Timer gesteuert zu werden, nicht jedoch die Fähigkeit eines Empfangens des Reifendrucksignals.

8. Verfahren nach Anspruch 6 oder 7, bei dem das mittlere Maß an Funktionalität ein Analysieren der Druckwerte umfasst, und falls die Analyse inakzeptable Druckwerte angibt, das TPM-Modul dazu eingerichtet ist, ein Reifendruckmesssignal (20) zu erzeugen.

9. Verfahren nach einem der Ansprüche 6 bis 8, wobei das Verfahren ein Erzeugen eines Reifendruckmesssignals (20) umfasst, das eine Angabe des Reifendruckstatus enthält.

10. Computerprogramm P, wobei das Computerprogramm P einen Computerprogrammcode umfasst, um ein Reifendrucküberwachungsmodul nach einem der Ansprüche 1 bis 4 oder einen mit dem Modul verbundenen Computer dazu zu veranlassen, das Verfahren nach einem der Ansprüche 6 bis 9 auszuführen.

11. Computerprogrammprodukt mit einem auf einem computerlesbaren Medium gespeicherten Computerprogrammcode zum Durchführen des Verfahrens nach einem der Ansprüche 6 bis 9, wenn der Computerprogrammcode von einem Reifendrucküberwachungsmodul nach einem der Ansprüche 1 bis 4 oder einem mit dem Modul verbundenen Computer ausgeführt wird.

## Revendications

1. Module de surveillance de pression de pneu (TPM) (2) pour un véhicule (4), le module TPM comprend une unité de réception de signal (6) et une unité de commande (8) configurée pour recevoir un signal d'activation (10) et comprenant un temporisateur d'activation (12) et une unité de stockage (14), l'unité de réception (6) est configurée pour recevoir de manière répétée des signaux de pression de pneu (16) transmis sans fil, chaque signal de pression de pneu (16) comprend une valeur de pression de pneu mesurée, étant transmise à une période de temps constante T entre chaque transmission à partir d'un module de capteur de pression (18) agencé pour la mesure de pression de pneu, le module de surveillance de pression de pneus est adapté pour être en mode on, en mode off et en mode sortie de veille, dans lequel
- dans ledit mode on, le module TPM a un haut niveau de fonctionnalité, et le module est configuré pour entrer dans le mode on si ledit signal d'activation (10) est on, et pour quitter le mode on si ledit signal d'activation (10) est off,
- dans ledit mode off, le module TPM a un faible niveau de fonctionnalité, le module est configuré pour entrer dans le mode off si ledit signal d'activation (10) est off, et pour quitter le mode off si ledit signal d'activation (10) est on, et
- dans ledit mode sortie de veille, le module TPM a un niveau moyen de fonctionnalité, comprenant la capacité d'être contrôlé par ledit temporisateur, pour recevoir un signal de pression de pneu (16), et pour mettre à jour ladite unité de stockage (14) avec des valeurs de pression à partir desdits signaux de pression de pneu (16), dans lequel le module est configuré pour entrer dans le mode sortie de veille à partir du mode off à condition qu'une période de temps d'activation variable (AT, AT', AT'') dudit temporisateur d'activation (12) se soit écoulée, et que le mode sortie de veille soit actif durant une période de temps T+A ayant une longueur prédéterminée qui est plus longue que ladite période de temps constante T, et la capacité de quitter le mode sortie de veille si ledit signal d'activation (10) est on, dans lequel ledit temporisateur d'activation est configuré pour commander ladite période de temps d'activation de sorte qu'elle soit augmentée à condition que lesdites valeurs de pression mesurées soient relativement constantes ou dans lequel ledit temporisateur d'activation est configuré pour commander ladite période de temps d'activation en fonction de la variation desdites valeurs de pression mesurées ou dans lequel ladite période de temps d'activation est une période de temps prédéterminée liée à la période de temps durant laquelle ledit signal d'activation est off.

2. Module TPM selon la revendication 1, dans lequel ledit faible niveau de fonctionnalité comprend la capacité d'être contrôlé par ledit temporisateur, mais pas la capacité de réception dudit signal de pression de pneu.

3. Module TPM selon la revendication 1 ou 2, dans lequel ledit niveau moyen de fonctionnalité comprend l'analyse desdites valeurs de pression, et si ladite analyse indique des valeurs de pression inacceptables, le module TPM est configuré pour générer un signal d'indication.

4. Module TPM selon l'une quelconque des revendications 1 - 3, dans lequel ledit module TPM est configuré pour générer un signal de mesure de pression de pneu (20) comprenant une indication de l'état de pression de pneu.

5. Véhicule comprenant un système de surveillance de pression de pneu (TPM) comprenant ledit module TPM selon l'une quelconque des revendications 1 -4, dans lequel ledit système comprend également une pluralité de modules de capteur de pression de pneu agencés en connexion avec des pneus du véhicule.

6. Procédé en connexion avec un module de surveillance de pression des pneus (TPM) (2) pour un véhicule (4), le module TPM comprend une unité de réception de signal (6) et une unité de commande (8) configurée pour recevoir un signal d'activation (10) et comprenant un temporisateur d'activation (12) et une unité de stockage (14), l'unité de réception (6) est configurée pour recevoir de manière répétée des signaux de pression de pneu (16) transmis sans fil, chaque signal de pression de pneu (16) comprend une valeur de pression de pneu mesurée, étant transmise à une période de temps constante T entre chaque transmission à partir d'un module de capteur de pression (18) agencé pour la mesure de pressions de pneu, le-module de surveillance de pression de pneu est adapté pour être dans un mode on ayant un haut niveau de fonctionnalité, un mode off ayant un faible niveau de fonctionnalité et un mode sortie de veille ayant un niveau moyen de fonctionnalité, dans lequel le procédé comprend :
- l'entrée du mode on si ledit signal d'activation (10) est on, et la sortie du mode on si ledit signal d'activation (10) est off,
- l'entrée du mode off si ledit signal d'activation (10) est off, et la sortie du mode off si ledit signal d'activation (10) est on,
- l'entrée dans le mode sortie de veille à partir du mode off à condition qu'une période de temps d'activation variable (AT, AT', AT'') dudit temporisateur d'activation (12) se soit écoulée, et que le mode sortie de veille soit actif durant une période de temps T+A ayant une longueur prédéterminée qui est plus longue que ladite période de temps constante T, et la sortie du mode sortie de veille si ledit signal d'activation (10) est on, dans lequel durant le mode sortie de veille le module TPM a la capacité d'être contrôlé par ledit temporisateur, pour recevoir un signal de pression de pneu (16), et pour mettre à jour ladite unité de stockage (14) avec des valeurs de pression à partir desdits signaux de pression de pneu (16), dans lequel le procédé comprend la commande de ladite période de temps d'activation de sorte qu'elle soit augmentée à condition que lesdites valeurs de pression mesurées soient relativement constantes ou, dans lequel le procédé comprend la commande de ladite période de temps d'activation en fonction de la variation desdites valeurs de pression mesurées ou dans lequel ladite période de temps d'activation est une période de temps prédéterminée liée à la période de temps durant laquelle ledit signal d'activation est off.

7. Procédé selon la revendication 6, dans lequel ledit faible niveau de fonctionnalité comprend la capacité d'être contrôlé par ledit temporisateur, mais pas la capacité de recevoir ledit signal de pression de pneu.

8. Procédé selon la revendication 6 ou 7, dans lequel ledit niveau moyen de fonctionnalité comprend l'analyse desdites valeurs de pression, et si ladite analyse indique des valeurs de pression inacceptables, le module TPM est configuré pour générer un signal de mesure de pression de pneu (20).

9. Procédé selon l'une quelconque des revendications 6-8, dans lequel le procédé comprend la génération d'un signal de mesure de pression de pneu (20) comprenant une indication de l'état de pression de pneu.

10. Programme informatique P, dans lequel ledit programme informatique P comprend un code de programme informatique pour amener un module de mesure de pneu selon l'une quelconque des revendications 1 -9, ou un ordinateur connecté audit module, à exécuter le procédé selon l'une quelconque des revendications 6-9.

11. Produit de programme informatique comprenant un code de programme informatique stocké sur un support lisible par ordinateur pour exécuter le procédé selon l'une quelconque des revendications 6-9, lorsque le code de programme informatique est exécuté par un module de mesure de pneu selon l'une quelconque des revendications 1-5, ou par un ordinateur connecté audit module.
